# EUROPÄISCHE PATENTSCHRIFT

(11) **EP 4 092 329 B1**
(45) Veröffentlichungstag und Bekanntmachung des Hinweises auf die Patenterteilung: **07.06.2023**
(21) Anmeldenummer: 22158159.8
(22) Anmeldetag: 23.02.2022
(51) Int. Cl.: F24C 15/00, A21B 3/10, F21V 17/14, F21W 131/307, F21V 3/02

(54) **BACKOFENLEUCHTE MIT AXIAL WIRKENDER VERRIEGELUNG**
OVEN LIGHT WITH AXIAL LOCKING DEVICE
LAMPE DU FOUR À VERROUILLAGE AXIAL

(30) Priorität: 18.05.2021 DE 102021112800
(43) Veröffentlichungstag der Anmeldung: 23.11.2022
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Buhl, Robert, 59755 Arnsberg (DE)
(74) Vertreter: Ostriga Sonnet Wirths & Vorwerk

(56) Entgegenhaltungen:
- EP-A1- 1 811 227
- EP-A2- 1 505 351
- US-A1- 2011 149 552

## Beschreibung

Die Erfindung betrifft eine Gargeräteleuchte, insbesondere Backofenleuchte, die an ihrer Oberseite ein Leuchtenglas aufweist und unterseitig mit einer Fassung versehen ist, wobei eine geometrische Längsmittelachse vertikal durch die Fassung gelegt ist,
- mit einem Hals an der Unterseite des Leuchtenglases, welcher wenigstens eine Nutanordnung aus einer axial verlaufenden Vertikalnut und einer sich daran anschließenden, in Kragenumfangsrichtung verlaufenden Horizontalnut trägt, die beide für den Eingriff eines Riegels radial offen sind, wobei
- die Vertikalnut eine axial weisende Riegeleintrittsöffnung aufweist und wobei
- die Horizontalnut mit einer axial weisenden Riegelstützfläche, mit einem Sicherungsvorsprung und an ihrem der Vertikalnut abliegenden Ende mit einem Bewegungsendanschlag versehen ist,
- mit einem Befestigungselement, welches einen Riegel ausbildet, der an der Fassung festgelegt ist und nach vollziehen einer Steck- und Drehbewegung radial in die Nutanordnung eingreift, um das Leuchtenglas an der Fassung zu befestigen,
- mit einem Anlageflansch als Teil der Fassung, an welchem das Leuchtenglas anliegt, wobei
- das Befestigungselement (34) ein Federelement aufweist, das den Riegel (37) trägt.

Gargeräteleuchten dienen dazu, den Garraum von Gargeräten zu beleuchten, um das darin zubereitete Gargut während des Garvorgangs beobachten und sich ein Bild vom Garzustand machen zu können. Solche Leuchten sind beispielweise in der US 2011/0149552 A1 gezeigt. Die dort gezeigte Leuchte zeigt einen Haltering, der außenumfänglich auf eine Fassung aufgesetzt wird. Radial weisende Riegelnocken führen entlang einer Riegelnut eine Überhubbewegung aus, um ein einem Riegelsitz einzugreifen. In dieser Riegellage sind die Riegelnocken axial kraftlos.

In EP 1 505 351 A2 wird eine Verschraubung zwischen Leuchteglas und Befestigungshülse einer Gargeräteleuchte vorgeschlagen, wobei die hülsenseitigen Gewindevorsprünge eine gewisse Federelastizität aufweisen.

Gargeräte zeichnen sich unter anderem dadurch aus, dass innerhalb des Garraums Gardünste, der sogenannte Wrasen sich während der Zubereitung von Speisen ausbreitet. Darüber hinaus - insbesondere wenn es sich um Backöfen oder Dampfgarer handelt - herrschen in den Garräumen hohe Temperaturen vor. Bei sogenannten Pyrolyseöfen können diese Temperaturen bis 450°C betragen. Öfen in Großküchen und Restaurants erreichen teilweise Gartemperaturen von über 500°C.

Auch wenn in Gargeräten - wie Backöfen - teilweise LED-Leuchtmittel Einzug halten, haben traditionelle Glühwendellampen in diesem Bereich weiterhin ihre Berechtigung und eine immer noch hohe Bedeutung. Dies hängt zum einen mit den etablierten Produktionstechniken zusammen. Solche Gargeräteleuchten sind in ihrer Herstellung und Anwendung erprobt und vergleichsweise kostengünstig. Auf der anderen Seite gibt es durchaus technische Gründe für den Einsatz traditioneller Leuchtmittel. Hier spielen insbesondere die Gartemperaturen eine große Rolle, die Laufzeit verkürzend auf die temperatursensiblen Leuchtmittel wirken.

Auch andere Probleme traditioneller Gargeräteleuchten, wie beispielsweise das Festbacken bzw. Festbrennen des Leuchtenglases in der Fassung wurde gelöst. So zeigt beispielsweise EP 1 811 227 A1 eine gattungsgemäße Gargeräteleuchte. Bei dieser ist die Fassung in einer Montageausnehmung der Garraumwand festgelegt und trägt eine Glühwendellampe mit weit verbreitetem G9-Sockel. Das Leuchtenglas wird über eine Steckdrehbewegung ähnlich einer bajonettartigen Befestigung an der Fassung festgelegt, wobei ein im Wesentlichen radial wirkender und federelastisch ausgebildeter Riegel eine sicher lösbare Festlegung des Leuchtenglases an der Fassung gewährleistet.

Hierzu verfügt der Hals des Leuchtenglases innerhalb der Horizontalnut über verschiedene ins Glas eingeformte Schrägflächen, die teils ein linienförmiges, teils ein punktförmiges Anliegen des radial wirkenden Riegels sicherstellen und so ein Festbacken zwischen Riegel und Leuchtenglase verhindern. Der Riegel, welcher als Federzunge ausgebildet ist, verfügt darüber hinaus über eine besondere Ausprägung und gewährleistet im Zusammenhang mit der Horizontalnut bei Zimmertemperatur über ein gewisses Axialspiel. Auf diese Weise wird ein Festbacken des Leuchtenglases am Fassungsflansch verhindert. Diese ausgesprochen vorteilhafte Gargeräteleuchte ist aufgrund der in den Leuchtenhals präzise einzuformenden Schrägflächen und der besonderen Ausgestaltung der radial wirkenden Riegel vergleichsweise aufwendig in der Produktion.

Es ist deshalb Aufgabe der Erfindung, eine vorteilhaft gegen Festbacken des Leuchtenglases geschützte Gargeräteleuchte, insbesondere Backofenleuchte zu schaffen, welche einen alternativen und fertigungstechnisch günstigeren Aufbau aufweist.

Gelöst wird die Aufgabe von einer Gargeräteleuchte mit den Merkmalen des Anspruchs 1, insbesondere mit dessen kennzeichnenden Merkmalen, wonach
- der Riegel eine axial nach unten weisende Riegelfläche aufweist, die an einer axial nach oben weisenden Riegelstützfläche anliegt,
- das Federelement eine axial nach unten gerichtete Kraft auf das Leuchtenglas ausübt, um dieses gegen den Anlageflansch zu halten.

Der wesentliche Vorteil der erfindungsgemäßen Backofenleuchte liegt zunächst in der Ausbildung des Riegels, welcher das Leuchtenglas an der Fassung hält. Dieses greift zwar radial in die Horizontalnut ein, es wirken jedoch axial gerichtete Flächen der Horizontalnut und des Riegels zusammen, so dass auf die Ausformung radial gerichteter Schrägflächen am Hals des Leuchtenglases verzichtet werden kann.

Die durch das Zusammenwirken von Riegel und Federelement gewährleistete rückstellelastische Verformung in Axialrichtung und die dadurch beim Festlegen des Leuchtenglases entstehenden axial gerichteten Federkräfte halten zum einen das Leuchtenglas sicher am fassungsseitigen Anlageflansch. Zum anderen gewährleisten sie ein einfaches Lösen des Leuchtenglases, wenn die in der Fassung gehaltene Lampe auszutauschen ist.

In einer besonders bevorzugten Ausführungsform ist vorgesehen, dass der Riegel einen axial zur Riegelstützfläche vorspringenden Stütznocken ausbildet.

Hier interagiert lediglich der Stütznocken des Riegels mit der Riegelstützfläche der Horizontalnut, so dass eine im Wesentlichen punktförmige Anlagefläche zwischen dem Riegel und der Riegelstützfläche vorhanden ist. Dies vermindert das Risiko des Festbackens des Riegels an der Riegelstützfläche der Horizontalnut erheblich. Dabei kann der Stütznocken beispielsweise als Einprägung in den aus einem Blech ausgeformten Riegel hergestellt werden.

Ferner ist vorgesehen, dass
- der Sicherungsvorsprung eine sich gegenüber der Riegelstützfläche axial nach oben erhebende Schwelle ist,
- der Riegel an seinen horizontal weisenden Enden mit Schrägflächen versehen ist, die der Riegelstützfläche zugewandt sind und in Richtung Riegelstützfläche abfallen.

Bei dieser Ausführungsform wird dem Riegel bei der Steckdrehbewegung zur Festlegung des Leuchtenglases in der Fassung eine Überhubbewegung über den Sicherungsvorsprung aufgezwungen. Diese Überhubbewegung findet im Rahmen der Drehbewegung des Leuchtenglases statt. Ein unkontrolliertes Rückdrehen kann so durch den Sicherungsvorsprung vermieden werden. Die vom Riegel ausgebildeten Schrägflächen erleichtern die Überhubbewegung, indem diese auf dem Sicherungsvorsprung abgleiten.

Es ist ferner vorgesehen, dass ein Federarm als Teil des Befestigungselementes an seinem ersten Ende den Riegel trägt und mit seinem zweiten Ende an einer Blattfeder angebunden ist und dass die Blattfeder unter Aufbau einer Federspannung axial ausfedert und eine Axialverlagerung des am Federarm angebundenen Riegels ermöglicht.

Die Blattfeder erlaubt einen zusätzlichen Axialhub des Riegels und ermöglicht auf diese Weise beispielsweise den Ausgleich von Fertigungstoleranzen, die sich verlängernd in Axialrichtung auf den Fassungskörper oder den Hals des Leuchtenglases auswirken.

Die durch die Blattfeder verstärkte Axialbeweglichkeit des Riegels erlaubt es jedoch auch, zwischen Anlageflansch der Fassung und das Leuchtenglas eine Dichtung, reibungsminimierendes Material oder ähnliches zu setzen, ohne dass die Gargeräteleuchte in ihrer Konstruktion angepasst werden muss. Insoweit kann die Backofenleuchte auf herstellerspezifische Wünsche hin eingesetzt werden, ohne dass eine Anpassung erforderlich ist. So ist es beispielsweise möglich, mit ein und derselben Gargeräteleuchte sowohl einen Dichtring zwischen Leuchtenglas und Anlageflansch vorzusehen, wie auch einen Einsatz ohne einen solchen Dichtring zu ermöglichen.

Es ist weiterhin vorgesehen, dass die Fassung eine auf einem horizontal ausgerichteten Fassungsboden aufstehende Ringwand ausbildet, die einen Aufnahmeraum umgrenzt und wenigstens eine Aufnahmenut für den Federarm des Befestigungselementes aufweist, in welcher der Federarm mit Radialspiel einsitzt.

Das mögliche Radialspiel des Federarms ist ein weiterer Faktor, um Axialspiel in der Konstruktion zu erlauben. Wenn die Axialverlagerung der Blattfeder ausgereizt ist, erlaubt ein radiales Aufweiten der Federarme ein leichtes Abgleiten der grundsätzlich horizontal ausgestellten Riegel und hierbei eine Schrägstellung derselben. Hieraus resultiert dann eine - wenn auch geringe - Möglichkeit, weiteres Axialspiel in die Verbindung zwischen Fassung und Leuchtenglas zu bekommen.

Ein wesentliches Element der Erfindung kennzeichnet sich dadurch, dass die Blattfeder, der Federarm und der Riegel eine Federanordnung aus einem federelastischen Blech bilden,
- mit einer radial gerichteten und axial ausfedernden Blattfeder,
- mit einem radial gerichteten und axial ausfedernden Riegel und
- gegebenenfalls mit einem axial gerichteten und radial ausfedernden Federarm.

Ferner ist vorgesehen, dass das Befestigungselement mittels der Blattfeder an der Fassung festgelegt ist, insbesondere, wenn die Blattfeder Teil eines Ringes ist, der innerhalb des Aufnahmeraumes angeordnet und an der Ringwand oder am Fassungsboden festgelegt ist.

Weitere Vorteile der Erfindung sowie ein besseres Verständnis derselben ergibt sich aus der nachfolgenden Beschreibung eines Ausführungsbeispiels. Es zeigen:

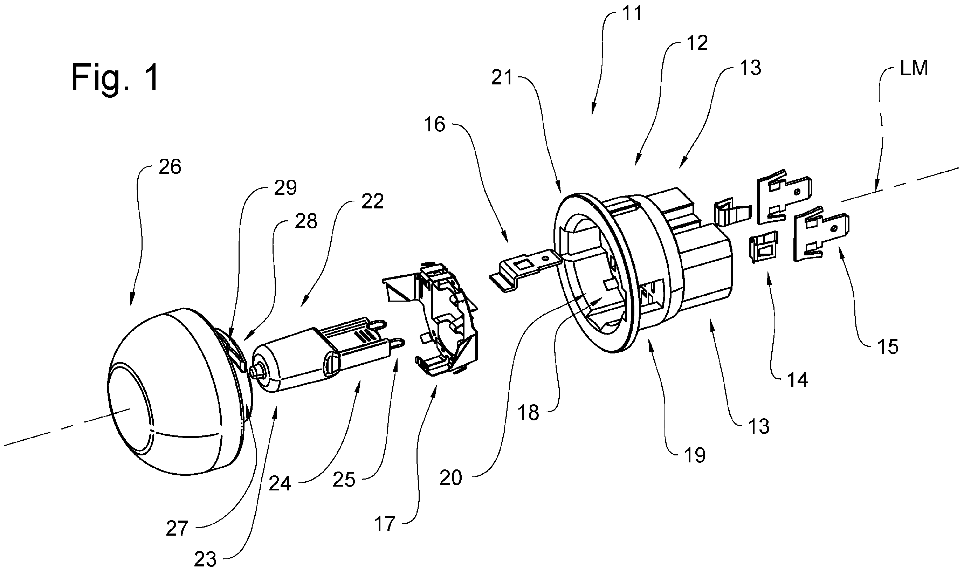

Fig. 1 eine Explosionsdarstellung einer erfindungsgemäßen Gargeräteleuchte,
Fig. 2 ein Befestigungsring der Gargeräteleuchte aus Figur 1 in Perspektive,
Fig. 3 der Befestigungsring nach Figur 2 in Ansicht von oben,
Fig.4 der Befestigungsring nach Figur 2 gemäß Schnittlinie IV-IV in Figur 3,
Fig. 5 eine Seitenansicht des Leuchtenglases der Gargeräteleuchte nach Figur 1,
Fig. 6 eine Ansicht von unten auf das Leuchtenglas aus Figur 5 gemäß Ansichtspfeil VI,
Fig. 7 eine Schnittdarstellung durch die Gargeräteleuchte gemäß Figur 1,
Fig. 8 die Schnittdarstellung gemäß Figur 7 unter Zwischenlage einer Dichtung zwischen Leuchtenglas und Lampenfassung,
Fig. 9 Darstellung des Zusammenwirkens von Leuchtenglas und Befestigungsring in einer ersten Relativausrichtung und
Fig. 10 Darstellung des Zusammenwirkens von Leuchtenglas und Befestigungsring in einer zweiten Relativausrichtung.

In den Figuren ist eine erfindungsgemäße Gargeräteleuchte in Form einer Backofenleuchte insgesamt mit der Bezugsziffer 10 versehen.

Die Backofenleuchte 10 umfasst zunächst eine Lampenfassung 11, deren Fassungsstein 12 in zwei auf seiner Unterseite angeordneten Stutzen 13 je einen Fassungskontakt 14 und einen Anschlusskontakt 15 lagert.

Der Fassungsstein 12 nimmt darüber hinaus einen Schutzleiterkontakt 16 auf und lagert darüber hinaus einen Befestigungsring 17 in einem Aufnahmeraum 18, der durch eine Ringwand 19 gebildet ist, die an ihrem eine Einsetzöffnung 20 umgebenden Ende einen Halteflansch 21 trägt.

Die Backofenleuchte 10 umfasst ferner eine Lampe 22, die im vorliegenden Fall als G9-Lampe ausgebildet ist und deren Lampenkolben 23 an seinem dem Fassungsstein 12 zugewandten Ende einen Sockel 24 mit Sockelkontakten 25 trägt.

Ein Leuchtenglas 26 bildet an seinem unteren, dem Fassungsstein 12 zugewandten Ende einen ringförmigen Hals 27 aus, der eine Aufnahmeöffnung 28 zur Aufnahme der Lampe 22 umgibt und - im Ausführungsbeispiel außenumfänglich - Befestigungsmittel 29 trägt.

Das Leuchtenglas 26 wird über den Befestigungsring 17 an der Lampenfassung 11 festgelegt, was im Weiteren detailliert beschrieben wird. Das Leuchtenglas 26 bildet das obere Ende der Backofenleuchte 10, die Fassung 11 bildet das untere Ende der Backofenleuchte 10, wobei sich von oben nach unten, also vertikal durch die Backofenleuchte 10 hindurch eine geometrische Längsmittelachse LM gelegt ist.

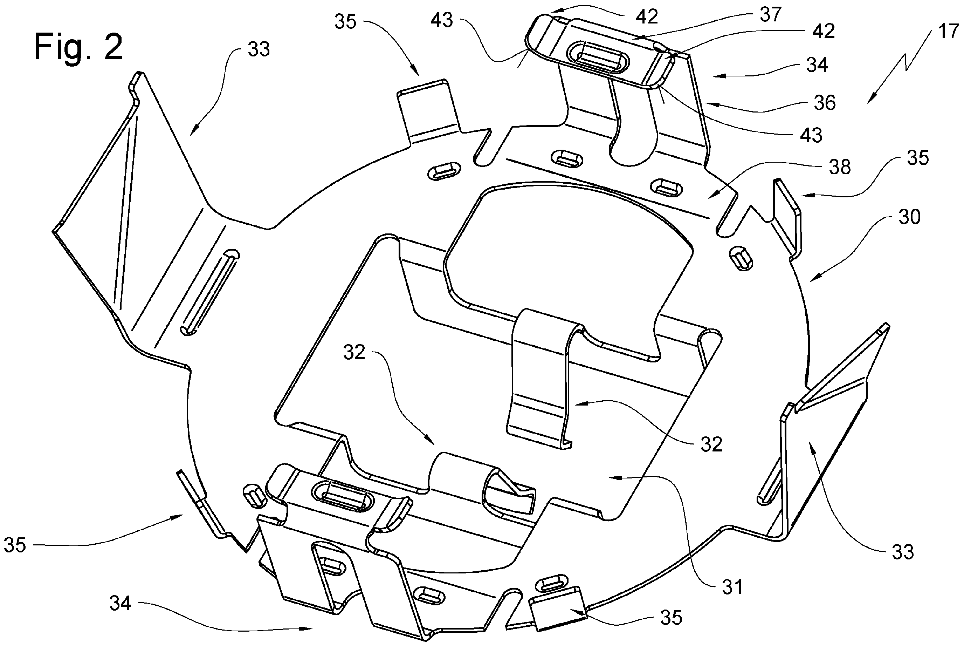

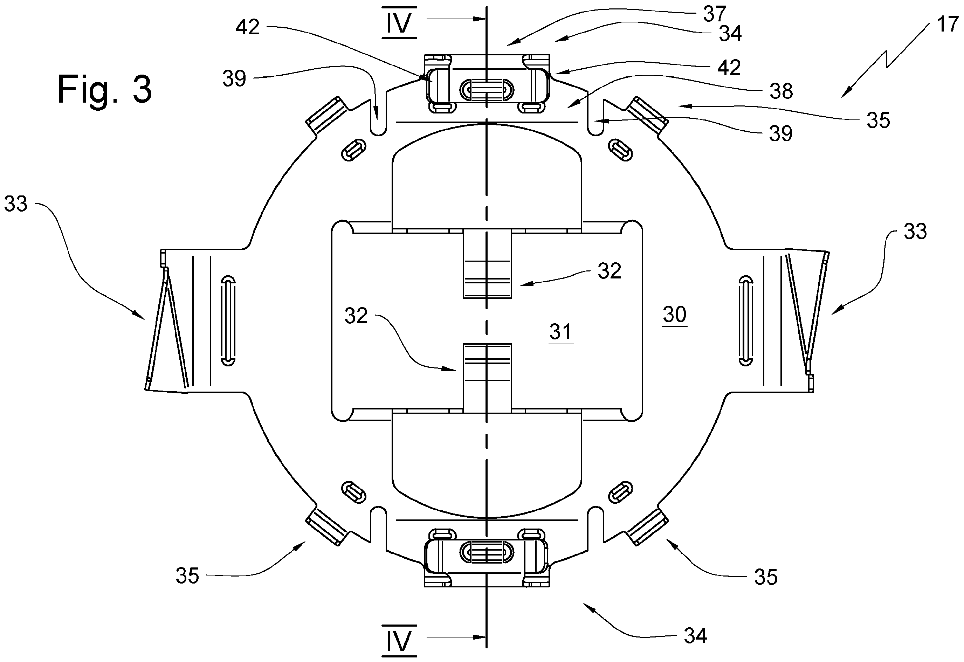

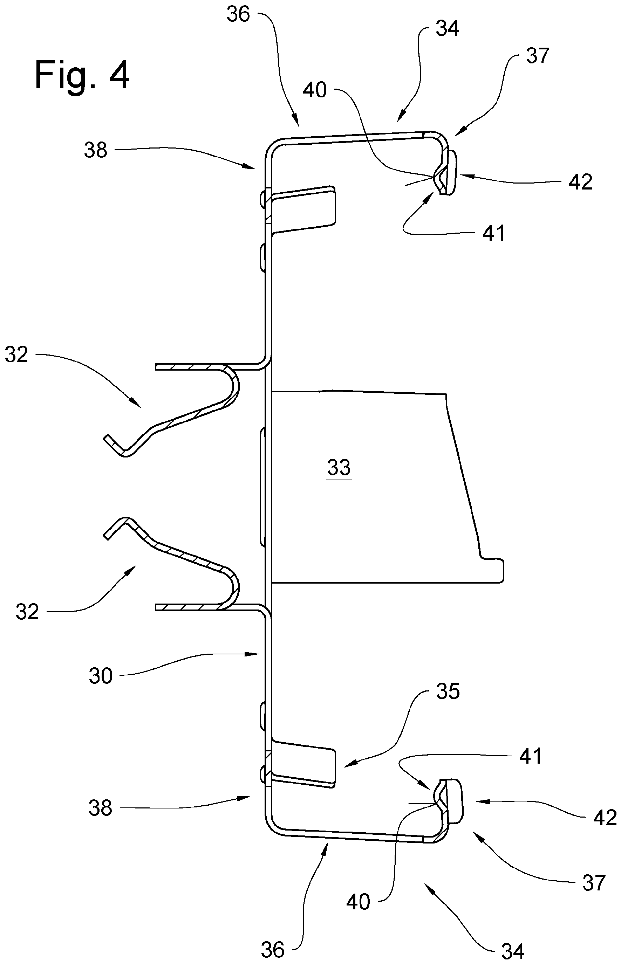

Die Figuren 2 bis 4 zeigen den Befestigungsring 17 in unterschiedlichen Ansichten, nämlich in perspektivischer Ansicht von oben (vgl. Figur 2), direkter Ansicht von oben (vgl. Figur 3) sowie im Schnitt gemäß Schnittlinie IV-IV in Figur 3 (vgl. Figur 4).

Der Befestigungsring 17 umfasst zunächst einen Basis 30, bei welcher es sich um ein ebenes, flächiges, ringförmiges Metallteil handelt, das mit einer Reihe von Funktionsorganen bestückt ist. So bildet die Basis 30 zunächst eine zentrale Sockelausnehmung 31 aus, durch welche der Lampensockel 24 hindurchtaucht und in welche Haltefedern 32 eingreifen, die der Halterung des Sockels 24 im Fassungsstein 12 dienen. Einander diametral gegenüberliegende Rastfedern 33 dienen der Festlegung des Fassungssteins 12 und somit der Backofenleuchte 10 an einer Wandung eines Gargerätes, indem sie einen Wandabschnitt zwischen sich und dem Halteflansch 21 aufnehmen. 90° umfangsversetzt zu den Rastfedern 33 verfügt der Befestigungsring 17 über zwei einander diametral gegenüberliegende, insgesamt mit der Bezugsziffer 34 versehene Befestigungselemente, mittels derer das Leuchtenglas 26 am Fassungsstein 12 lösbar zu befestigen ist.

Ebenfalls außenumfänglich an der Basis 30 angeordnete Haltelaschen 35 dienen der Festlegung des Befestigungsrings 17 an der Innenoberfläche der Ringwand 19 des Fassungssteins 12.

Jedes Befestigungselement 34 weist zunächst einen Federarm 36 auf, der sich von der Basis 30 aus achsparallel zur Längsmittelachse LM erstreckt, also im Wesentlichen vertikal ausgerichtet ist. An seinem der Basis 30 abgewandten Ende hält der Federarm 36 einen Riegel 37, welcher horizontal ausgerichtet und radial nach innen gerichtet ist, also in Richtung der Längsmittelachse LM weist.

Das basisnahe Ende des Federarms 36 ist an einer Blattfeder 38 angebunden. Diese Blattfeder 38 entsteht durch zwei beidseitig des Federarms 36 liegende, parallel zueinander gerichtete Einschnitte 39 in die Basis 30. Der aus einem federelastischen Blech gebildete Befestigungsring 17, es handelt sich um ein Stanzbiegeteil, gewährleistet im Bereich der Befestigungselemente 34 ein rückstellelastisches Auslenken des Riegels 37 und der Blattfeder 38 in Axialrichtung, wohingegen der Federarm 36 in Radialrichtung auslenkbar ist.

Der Riegel 37 bildet eine in Richtung Basis 30, also nach unten weisende Riegelfläche 40 aus, wobei aus dieser ein axial in Richtung Basis 30, also nach unten weisender Stütznocken 41 entspringt. Dieser Stütznocken 41 ist durch einen entsprechenden Prägevorgang in den Riegel 37 eingetrieben.

Die in Umfangsrichtung weisenden freien Enden des Riegels 37 sind als Flügel 42 ausgebildet und durch einen nicht näher bezeichneten Einschnitt vom Federarm 36 getrennt. Hierdurch lassen sie sich axial nach oben, also in Richtung Leuchtenglas 26 ausstellen und bilden zur Basis 30 weisende Schrägflächen 43 aus.

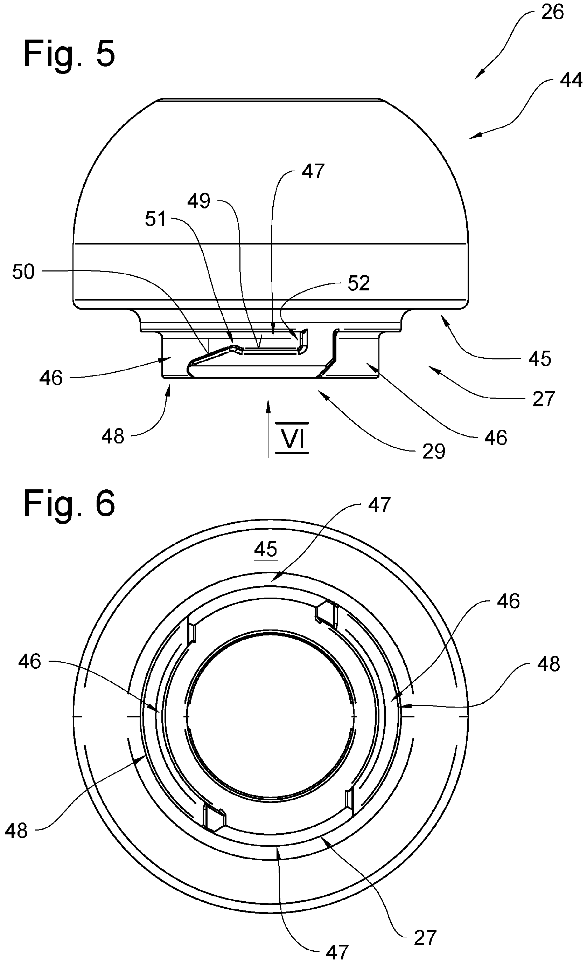

Figur 5 zeigt das Leuchtenglas 26 in Seitenansicht mit einem haubenartigen Abdeckkörper 44, welcher innen hohl ausgebildet ist und an seiner zum Fassungsstein 12 weisenden Unterseite den Hals 27 trägt. Der Hals 27 ist gegenüber dem Abdeckkörper 44 umfangsvermindert, so dass im gestuften Übergang zwischen Hals 27 und Abdeckkörper 44 ein Aufnahmeflansch 45 gebildet ist.

Der Hals 27 trägt ein insgesamt mit der Bezugsziffer 29 bezeichnetes Befestigungsmittel. Dieses ist gebildet von einer in den Hals 27 eingebrachten Vertikalnut 46, die in eine Horizontalnut 47 übergeht, wobei beide Nuten 46, 47 im Ausführungsbeispiel auf dem Außenumfang des Halses 27 ausgebildet sind und radial nach außen offen sind. Die Vertikalnut 47 weist darüber hinaus eine axialweisende Riegeleintrittsöffnung 48 auf, so dass der Riegel 37 beim Aufsetzen auf den Befestigungsring 17 in einer Steckbewegung X in die Vertikalnut 46 eintreten kann und durch eine Drehbewegung Y in die Horizontalnut 47 eingeführt wird.

Die Horizontalnut 47 ist mit einer axial nach oben, also zum Abdeckkörper 44 weisenden Riegelstützfläche 49 versehen, die im Eintrittsbereich der Horizontalnut 47 zunächst eine Spannschrägfläche 50 und einen sich daran anschließenden, die Horizontalnut 47 in Axialrichtung verengenden Sicherungsvorsprung 51 aufweist. An ihrem der Vertikalnut 46 abgewandten Ende bildet die Horizontalnut 47 durch einen Wandabschnitt einen Bewegungsendanschlag 52 aus.

Anhand der Figur 6, einer Ansicht von unten auf das Leuchtenglas 26 gemäß Ansichtspfeil VI in Figur 5 erkennt man, dass zwei diametral gegenüberliegende Befestigungsmittel 29 am Hals 27 des Leuchtenglases 26 angeordnet sind.

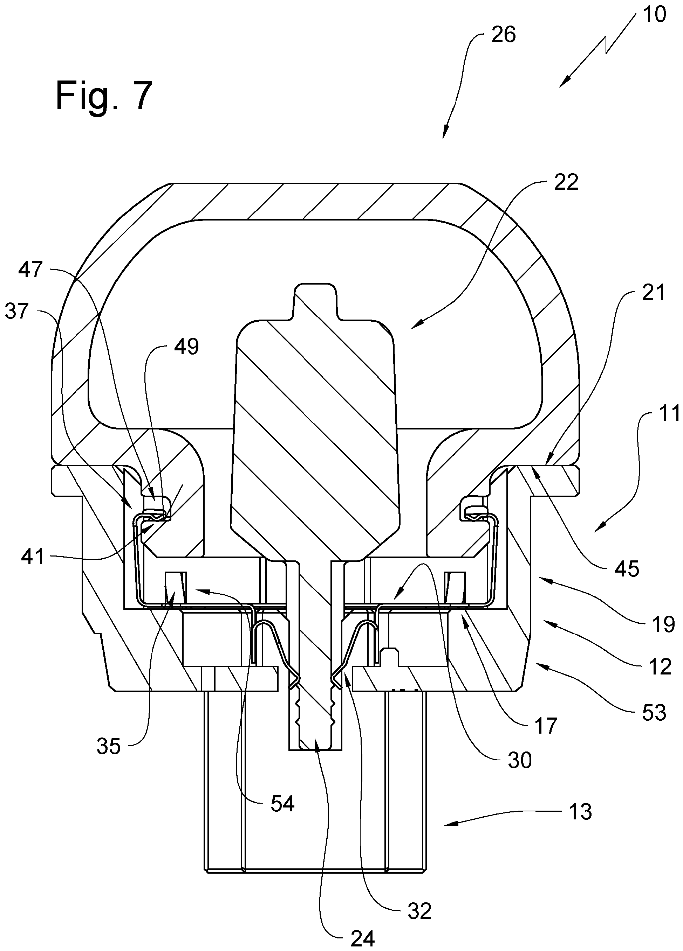

Figur 7 zeigt einen Axialschnitt durch die Backofenleuchte 10 in einer Standardkonfiguration, wobei die Schnittlage dem Schnitt durch den Befestigungsring 17 gemäß Schnittlinie IV-IV in Figur 3 entspricht.

Sichtbar an dieser Darstellung ist zunächst, dass die Lampenfassung 11, konkreter der Fassungsstein 12 über einen Fassungsboden 53 verfügt, der nach unten hin die Stutzen 13 hält und auf welchem die sich in Richtung Leuchtenglas 26 erstreckende Ringwand 19 aufgesetzt ist. Die Ausrichtung der Basis 30 des Befestigungsrings 17 ist fassungsbodenparallel, die Befestigungselemente 34, Rastfedern 33 und Haltelaschen 35 erstrecken sich hingegen im Wesentlichen axial in Richtung Leuchtenglas 26.

Die Ringwand 19 bildet innenumfänglich Haltebuchten 54 aus, in welche die Haltelaschen 35 eingreifen und so den Befestigungsring 17 am Fassungsstein 12 festlegen. Die Lampe 22 ist im Aufnahmeraum 18 des Fassungssteins 12 sowie innerhalb des Leuchtenglases 26 angeordnet, wobei der Lampensockel 24 durch die Sockelausnehmung 31 des Befestigungsrings 17 hindurch im Fassungsstein 12 einsitzt und von den Haltefedern 32 dort verankert ist.

Ersichtlich ist aus Figur 7 darüber hinaus, dass der Riegel 37 radial nach innen weisend in die Horizontalnuten 47 eingreift und dort allein mit seinem Stütznocken 41 auf der Riegelstützfläche 49 der Horizontalnut 47 aufliegt, also eine punktförmige bzw. je nach Ausbildung des Stütznockens 41 möglicherweise auch linienförmige Anlagefläche mit der Riegelstützfläche 49 ausbildet. Die hierdurch erreichte wesentliche Verringerung der gegenseitigen Ablagefläche von Riegel 37 und Horizontalnut 47 verhindert wirksam ein Festbacken bzw. Festbrennen Leuchtenglas 26 und Riegel 37.

Figur 7 zeigt darüber hinaus, dass der Auflageflansch 45 des Leuchtenglases 26 sicher am Halteflansch 21 des Fassungssteins 12 anliegt und so der Eintritt von Gardünsten zwischen Leuchtenglas 26 und Fassungsstein 12 vergleichsweise gut unterbunden ist.

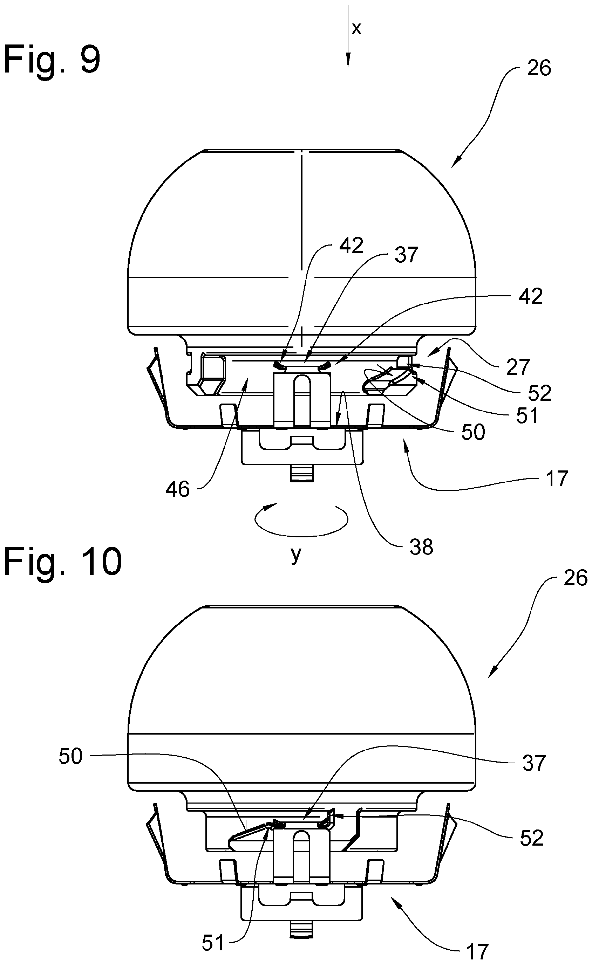

Die Figuren 9 und 10 verdeutlichen das Zusammenwirken des Befestigungsrings 17 und des Leuchtenglases 26 der Backofenleuchte 10 zur Festlegung des Leuchtenglases 26 an dem Fassungsstein 12.

Zunächst wird das Leuchtenglas 26 in Einsteckrichtung X auf den Fassungsstein 12 zubewegt, wobei der Hals 27 durch die Einsetzöffnung 20 der Ringwand 19 in den Aufnahmeraum 18 des Fassungssteins 12 eingesetzt wird. Dabei ist der Riegel 37 mit der Vertikalnut 46 ausgerichtet und tritt in diese ein. Die in Umfangsrichtung liegenden Flügel 42 laufen bei der nun folgenden Drehbewegung gemäß Pfeilrichtung Y im Übergang von Figur 9 zu Figur 10 auf die Spannschrägfläche 50 auf und gleiten an dieser ab, um den Reibungswiderstand zu minimieren. Dabei erfolgt eine federrückstellelastische Vorspannung zumindest des Riegels 37, ggf. auch der Blattfeder 38, was zu einem Auslenken beider in Vertikalrichtung führt. Die in den Sicherungsvorsprung 41 übergehende Spannschrägfläche 50 führt zu einer Überhubbewegung, solange bis der Riegel 37 in einem zwischen dem Sicherungsvorsprung 51 und dem Bewegungsendanschlag 52 liegenden Abschnitt der Horizontalnut 47 einsitzt (vgl. Figur 10). Die aufgebauten Federkräfte ziehen das Leuchtenglas 26 an den Halteflansch 21 (vgl. Figur 7). Das Leuchtenglas 26 sitzt so satt an der Fassung an.

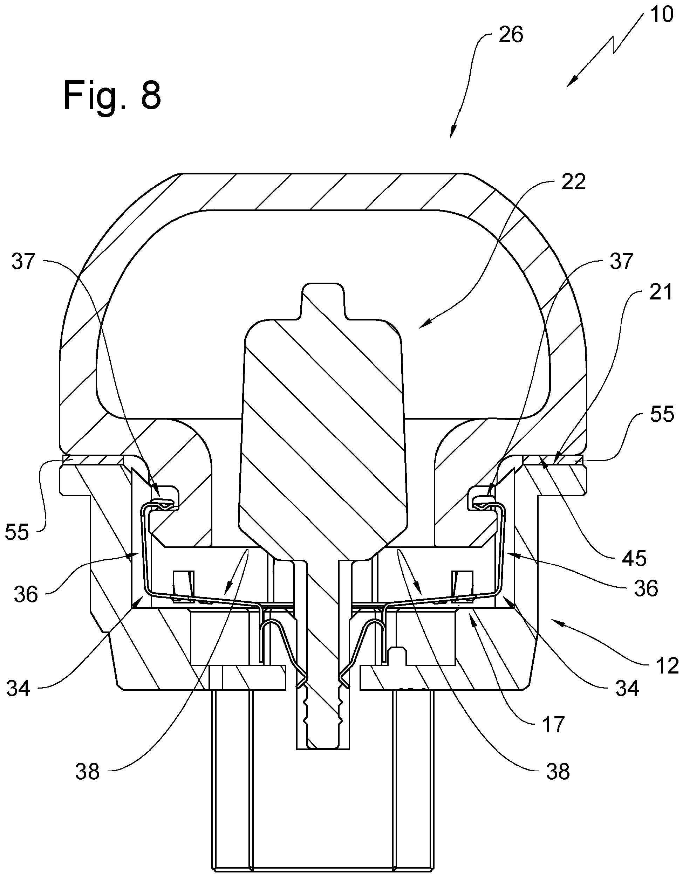

Die Kombination von axial auslenkbarem Riegel 37 und axial auslenkbarer Blattfeder 38 ermöglicht große Federwege und somit zunächst einmal einen großen Toleranzausgleich von Fertigungstoleranzen des Leuchtenglases 26 und des Fassungssteins 12. Die in Summe großen Federwege des Befestigungselementes 34 erlauben aber auch die Nutzung der Backofenleuchte 10 für besondere Anwendungen, wie sie beispielsweise in Figur 8 dargestellt sind. Hier ist eine Schnittansicht analog zu Figur 7 gewählt, jedoch ist zwischen dem Anlageflansch 45 des Leuchtenglases 26 und dem Halteflansch 21 des Fassungssteins 12 eine Dichtung 55 angeordnet, die in Axialrichtung eine gewisse Stärke aufweist und somit das Leuchtenglas 26 vom Fassungsstein 12 beabstandet. Figur 8 zeigt, wie hier zum Ausgleich des Axialabstands zwischen Leuchtenglas 26 und Fassungsstein 12 die Blattfedern 38 der Befestigungselemente 34 des Befestigungsrings 17 vertikal in Richtung Leuchtenglas 26 ausgelenkt werden. Die hierbei entstehenden Federrückstellkräfte halten das Leuchtenglas 26 sicher gegen den Fassungsstein 12 und sorgen für einen ausreichenden Anlagedruck des Auflageflansches 45 an der Dichtung 55 sowie darüber hinaus für den erforderlichen Anlagedruck zwischen Dichtung 55 und Halteflansch 21.

Der wesentliche Vorteil der Federanordnung von Blattfeder 38, Riegel 37 und Federarm 36 liegt also darüber hinaus darin, dass neben größeren Fertigungstoleranzen auch Dichtungsanordnungen zwischen Fassungsstein 12 und Leuchtenglas 26 vorgesehen werden können, ohne hierfür die Konstruktion der Backofenleuchte 10 zu verändern. Solche Dichtungspakete sind überall dort sinnvoll, wo einen hohe Gardunstbelastung existiert. Neben Backöfen, insbesondere im gewerblichen Einsatz, bieten sich für eine solche Dichtungsanordnung, wie sie Figur 8 zeigt, als Beispiel Dampfgargeräte an, bei welchen im Garraum eine hohe Feuchtigkeitsbelastung vorherrscht.

Alles in allem zeigt die Erfindung also eine vorteilhafte Backofenleuchte 10, die zunächst gegenüber dem eingangs genannten Stand der Technik eine vereinfachte Konstruktion des Leuchtenglases 26 bzw. der vom Leuchtenglas 26 ausgebildeten Befestigungsmittel 29 gestattet. Hierzu wird anstelle von radial wirkenden Riegelelementen auf axial wirkende Riegelelemente gesetzt. Um die Kontaktfläche zwischen den Befestigungsmitteln 29 und den Befestigungselementen 34 von Leuchtenglas 26 und Fassung 11 zu vermindern, wird vorgeschlagen, den Riegel 37 mit einem in Richtung Riegelstützfläche 49 weisenden Stütznocken 41 zu versehen. Auf diese Weise wird ein Festbacken zwischen dem Befestigungselement 34 auf Seiten der Fassung 11 und dem Befestigungsmittel 29 auf Seiten des Leuchtenglases 26 sicher vermieden.

Ein wesentlicher weiterer Vorteil liegt in der Ausbildung des Befestigungselementes 34 der Lampenfassung 11. Die Kombination aus vertikal auslenkbarer Blattfeder 38 und vertikal auslenkbarem Riegel 37 erlaubt die Überbrückung von großen Axialtoleranzen zwischen Leuchtenglas 26 und Fassungsstein 12. Diese können einerseits in Fertigungstoleranzen liegen, ermöglichen jedoch insbesondere auch die Zwischenlage von Dichtungspaketen zwischen Leuchtenglas 26 und Fassungsstein 12, ohne dass hierzu die Backofenleuchtenkonstruktion geändert werden muss.

Darüber hinaus ist der radial auslenkbare Federarm 36 bei extremen Axialtoleranzen hilfreich, um den Axialabstand zwischen Leuchtenglas 26 und Fassungsstein 12 zu überbrücken. Sollte beispielsweise ein gegenüber dem Dichtungspaket 55 in Figur 8 größerer Axialabstand zu überbrücken sein, welcher durch eine axiale Auslenkung der Blattfeder 38 oder des Riegels 37 allein nicht auszugleichen ist, so kann ein radiales Auslenken des Federarms 36 hier weiteren Axialspielraum gewähren.

### Bezugszeichenliste

- 10: Backofenleuchte
- 11: Lampenfassung
- 12: Fassungsstein
- 13: Stutzen
- 14: Fassungskontakt
- 15: Anschlusskontakt
- 16: Schutzleiterkontakt
- 17: Befestigungsring
- 18: Aufnahmeraum
- 19: Ringwand
- 20: Einsetzöffnung
- 21: Halteflansch
- 22: Lampe
- 23: Lampenkolben
- 24: Sockel
- 25: Sockelkontakt
- 26: Leuchtenglas
- 27: Hals
- 28: Aufnahmeöffnung
- 29: Befestigungsmittel
- 30: Basis
- 31: Sockelausnehmung
- 32: Haltefedern
- 33: Rastfeder
- 34: Befestigungselement
- 35: Haltelasche
- 36: Federarm
- 37: Riegel
- 38: Blattfeder
- 39: Einschnitt
- 40: Riegelfläche
- 41: Stütznocken
- 42: Flügel
- 43: Schrägfläche
- 44: Abdeckkörper
- 45: Aufnahmeflansch
- 46: Vertikalnut
- 47: Horizontalnut
- 48: Riegeleintrittsöffnung
- 49: Riegelstützfläche
- 50: Spannschrägfläche
- 51: Sicherungsvorsprung
- 52: Bewegungsendanschlag
- 53: Fassungsboden
- 54: Haltebucht
- 55: Dichtung

- LM: Längsmittelachse
- X: Einsteckrichtung
- Y: Drehbewegung

## Patentansprüche

1. Gargeräteleuchte, insbesondere Backofenleuchte (10), die an ihrer Oberseite ein Leuchtenglas (26) aufweist und unterseitig mit einer Fassung (11) versehen ist, wobei eine geometrische Längsmittelachse (LM) vertikal durch die Fassung (11) gelegt ist,
- mit einem Hals (27) an der Unterseite des Leuchtenglases (26), welcher wenigstens eine Nutanordnung aus einer axial verlaufenden Vertikalnut (46) und einer sich daran anschließenden, in Kragenumfangsrichtung verlaufenden Horizontalnut (47) trägt, die beide für den Eingriff eines Riegels (37) radial offen sind, wobei
- die Vertikalnut (46) eine axial weisende Riegeleintrittsöffnung (48) aufweist und wobei
- die Horizontalnut (47) mit einer axial weisenden Riegelstützfläche (49), mit einem Sicherungsvorsprung (51) und an ihrem der Vertikalnut (46) abliegenden Ende mit einem Bewegungsendanschlag (52) versehen ist,
- mit einem Befestigungselement (34), welches einen Riegel (37) ausbildet, der an der Fassung (11) festgelegt ist und nach Vollziehen einer Steck- und Drehbewegung radial in die Nutanordnung eingreift, um das Leuchtenglas (26) an der Fassung (11) zu befestigen,
- mit einem Anlageflansch als Teil der Fassung (11), an welchem das Leuchtenglas (26) anliegt, wobei
- das Befestigungselement (34) ein Federelement aufweist, das den Riegel (37) trägt,
**dadurch gekennzeichnet, dass**
- der Riegel (37) eine axial nach unten weisende Riegelfläche aufweist, die an der axial nach oben weisenden Riegelstützfläche (49) anliegt,
- das Federelement eine axial nach unten gerichtete Kraft auf das Leuchtenglas (26) ausübt, um dieses gegen den Anlageflansch zu halten.

2. Gargeräteleuchte nach Anspruch 1, **dadurch gekennzeichnet, dass** der Riegel (37) einen axial zur Riegelstützfläche (49) vorspringenden Stütznocken (41) ausbildet.

3. Gargeräteleuchte nach Anspruch 1 oder 2, **dadurch gekennzeichnet, dass**
- der Sicherungsvorsprung (51) eine sich gegenüber der Riegelstützfläche (49) axial nach oben erhebende Schwelle ist,
- der Riegel (37) an seinen in Umfangsrichtung weisenden Enden mit Schrägflächen (43) versehen ist, die der Riegelstützfläche (49) zugewandt sind und in Richtung Riegelstützfläche (49) abfallen.

4. Gargeräteleuchte nach einem der vorhergehenden Ansprüche, **dadurch gekennzeichnet, dass** ein Federarm (36) als Teil des Befestigungselementes an seinem ersten Ende den Riegel (37) trägt und mit seinem zweiten Ende an einer Blattfeder (38) angebunden ist und dass die Blattfeder (38) unter Aufbau einer Federspannung axial ausfedert und eine Axialverlagerung des am Federarm (36) angebundenen Riegels (37) ermöglicht.

5. Gargeräteleuchte nach Anspruch 4, **dadurch gekennzeichnet, dass** die Fassung (11) eine auf einem horizontal ausgerichteten Fassungsboden (53) aufstehende Ringwand (19) ausbildet, die einen Aufnahmeraum (18) umgrenzt und wenigstens eine Aufnahmenut für den Federarm (36) des Befestigungselementes (34) aufweist, in welcher der Federarm (36) mit Radialspiel einsitzt.

6. Gargeräteleuchte nach Anspruch 4, **dadurch gekennzeichnet, dass** die Blattfeder (38), der Federarm (36) und der Riegel (37) eine Federanordnung aus einem federelastischen Blech bilden,
- mit einer radial gerichteten und axial ausfedernden Blattfeder (38),
- mit einem radial gerichteten und axial ausfedernden Riegel (37) und
- gegebenenfalls mit einem axial gerichteten und radial ausfedernden Federarm (36).

7. Gargeräteleuchte nach Anspruch 4 und 5, **dadurch gekennzeichnet, dass** das Befestigungselement (34) mittels der Blattfeder (38) an der Fassung (11) festgelegt ist.

8. Gargeräteleuchte nach Anspruch 7, **dadurch gekennzeichnet, dass** die Blattfeder (38) Teil eines Ringes (17) ist, der innerhalb des Aufnahmeraumes (18) angeordnet und an der Ringwand (19) oder am Fassungsboden (53) festgelegt ist.

## Claims

1. Cooking appliance light, in particular an oven light (10), which has a light lens (26) on its upper side and is provided with a fitting (11) underneath, wherein a geometric longitudinal central axis (LM) runs vertically through the fitting (11),
- having a collar (27) on the underside of the light lens (26), which supports at least one groove arrangement consisting of an axially extending vertical groove (46) and a horizontal groove (47) extending in the direction of the periphery of the collar that follows this, which are both radially open for the engagement of a latch (37), wherein
- the vertical groove (46) has an axially facing latch inlet opening (48) and wherein
- the horizontal groove (47) is provided with an axially facing latch support surface (49), with a securing projection (51) and with a movement limiting stop (52) on its end facing away from the vertical groove (46),
- having a fastening element (34), which forms a latch (37) that is fixed to the fitting (11) and engages radially in the groove arrangement, after completing a plug-in movement and rotational movement, in order to fix the light lens (26) to the fitting (11),
- having a bearing flange as part of the fitting (11) on which the light lens (26) rests, wherein
- the fastening element (34) has a spring element that supports the latch (37), **characterised in that**
- the latch (37) has a latch surface that faces axially downwards and that lies on the latch support surface (49) that faces axially upwards,
- the spring element exerts a force on the light lens (26) that is directed axially downwards, in order to hold the light lens against the bearing flange.

2. Cooking appliance light according to claim 1, **characterised in that** the latch (37) forms a supporting stud (41) that protrudes axially to the latch support surface (49).

3. Cooking appliance light according to claim 1 or 2, **characterised in that**
- the securing projection (51) is a sill that rises axially upwards in relation to the latch support surface (49),
- the latch (37) is provided with sloping surfaces (43) on its end pointing in the peripheral direction, which face the latch support surface (49) and descend in the direction of the latch support surface (49).

4. Cooking appliance light according to one of the preceding claims, **characterised in that** a spring arm (36) supports the latch (37) on its first end, as part of the fastening element, and is connected to a leaf spring (38) on its second end, and **in that** the leaf spring (38) rebounds axially when a spring tension is built up and enables an axial displacement of the latch (37) connected to the spring arm (36).

5. Cooking appliance light according to claim 4, **characterised in that** the fitting (11) forms a ring wall (19) that stands on a horizontally aligned fitting base (53), the ring wall defining a receiving chamber (18) and having at least one receiving groove for the spring arm (36) of the fastening element (34), in which the spring arm (36) is seated with radial clearance.

6. Cooking appliance light according to claim 4, **characterised in that** the leaf spring (38), the spring arm (36) and the latch (37) form a spring arrangement made from a resilient metal sheet,
- having a radially oriented and axially rebounding leaf spring (38),
- having a radially oriented and axially rebounding latch (37) and
- optionally having an axially oriented and radially rebounding spring arm (36).

7. Cooking appliance light according to claim 4 and 5, **characterised in that** the fastening element (34) is fixed to the fitting (11) by means of the leaf spring (38).

8. Cooking appliance light according to claim 7, **characterised in that** the leaf spring (38) is part of a ring (17), that is arranged inside the receiving chamber (18) and is fixed to the ring wall (19) or to the fitting base (53).

## Revendications

1. Lampe pour appareil de cuisson, en particulier lampe de four (10), qui est pourvue d'un verre diffuseur (26) sur son côté supérieur et d'une douille (11) sur son côté inférieur, un axe médian longitudinal géométrique (LM) étant agencé verticalement à travers la douille (11), comprenant :
- un collet (27) sur le côté inférieur du verre diffuseur (26), qui comporte au moins un ensemble de rainures composé d'une rainure verticale (46) s'étendant axialement et d'une rainure horizontale (47) se raccordant à celle-ci et s'étendant dans la direction périphérique du collet, les deux rainures étant ouvertes radialement en vue de permettre l'engagement d'un verrou (37), dans laquelle
- la rainure verticale (46) présente une ouverture d'entrée de verrou (48) orientée axialement, et
- la rainure horizontale (47) présente une surface de support de verrou (49) orientée axialement, une saillie de retenue (51) et, à son extrémité distante de la rainure verticale (46), une butée de fin de course (52),
- un élément de fixation (34), qui constitue un verrou (37), qui est fixé à la douille (11) et qui, après avoir exécuté un mouvement d'enfichage et de rotation, s'engage radialement à l'intérieur de l'ensemble de rainures dans le but de fixer le verre diffuseur (26) à la douille (11),
- une bride de support qui fait partie de la douille (11) et sur laquelle le verre diffuseur (26) vient s'appuyer,
dans laquelle
- l'élément de fixation (34) comprend un élément de ressort qui supporte le verrou (37),
**caractérisée en ce que**
- le verrou (37) présente une surface de verrou orientée axialement vers le bas qui s'appuie sur la surface de support de verrou (49) orientée axialement vers le haut, et
- l'élément de ressort exerce une force orientée axialement vers le bas sur le verre diffuseur (26) dans le but de maintenir celui-ci contre la bride de support.

2. Lampe pour appareil de cuisson selon la revendication 1, **caractérisée en ce que** le verrou (37) forme une came de support (41) qui fait saillie axialement pour la surface de support de verrou (49).

3. Lampe pour appareil de cuisson selon la revendication 1 ou 2, **caractérisée en ce que**
- la saillie de retenue (51) est un seuil qui se dresse axialement vers le haut par rapport à la surface de support de verrou (49), et
- le verrou (37), à ses extrémités orientées dans la direction circonférentielle, est pourvu de surfaces inclinées (43) qui sont orientées en direction de la surface de support de verrou (49) et qui descendent en direction de la surface de support de verrou (49).

4. Lampe pour appareil de cuisson selon l'une quelconque des revendications précédentes, **caractérisée en ce qu'**un bras de ressort (36), qui fait partie de l'élément de fixation, supporte le verrou (37) à sa première extrémité et est relié par sa seconde extrémité à un ressort à lame (38), et **en ce que** le ressort à lame (38) se détend axialement en produisant une tension élastique et permet un déplacement axial du verrou (37) relié au bras de ressort (36).

5. Lampe pour appareil de cuisson selon la revendication 4, **caractérisée en ce que** la douille (11) forme une paroi annulaire (19) qui s'appuie sur une base de douille orientée horizontalement (53), qui délimite un espace de réception (18) et qui comporte au moins une rainure de réception pour le bras de ressort (36) de l'élément de fixation (34), rainure à l'intérieur de laquelle le bras de ressort (36) est inséré avec un jeu radial.

6. Lampe pour appareil de cuisson selon la revendication 4, **caractérisée en ce que** le ressort à lame (38), le bras de ressort (36) et le verrou (37) forment un ensemble de ressort qui est constitué d'une tôle élastique à ressort, comprenant :
- un ressort à lame à détente axiale orienté radialement (38),
- un verrou à détente axiale orienté radialement (37), et
- optionnellement un bras de ressort à détente radiale orienté axialement (36).

7. Lampe pour appareil de cuisson selon les revendications 4 et 5, **caractérisée en ce que** l'élément de fixation (34) est fixé à la douille (11) par l'intermédiaire du ressort à lame (38).

8. Lampe pour appareil de cuisson selon la revendication 7, **caractérisée en ce que** le ressort à lame (38) fait partie d'une bague (17) qui est agencée à l'intérieur de l'espace de réception (18) et qui est fixée à la paroi annulaire (19) ou à la base (53) de la douille.
